# EUROPEAN PATENT APPLICATION

(11) **EP 4 428 714 A1**
(43) Date of publication of application: **11.09.2024**
(21) Application number: 23160418.2
(22) Date of filing: 07.03.2023
(51) Int. Cl.: G06F 16/55, G06N 3/045, G06N 3/0475, G06N 3/09, G06N 3/096

(54) **MEASURING THE GENERALIZATION ABILITY OF A TRAINED MACHINE LEARNING MODEL WITH RESPECT TO GIVEN MEASUREMENT DATA**

(71) Applicant: Robert Bosch GmbH, 70442 Stuttgart (DE)
(72) Inventor: Khoreva, Anna, 70197 Stuttgart (DE); Li, Yumeng, 72070 Tuebingen (DE); Zhang, Dan, 71229 Leonberg (DE)

(57) **Abstract**

A method (100) for measuring the ability (1a) of a trained machine learning model (1) for the processing of measurement data to generalize, with respect to a given task, to a target domain and/or distribution to which one or more input records (2) of measurement data belong, comprising the steps of:
• determining (110), from the input records (2) of measurement data, a target style (2b) that characterizes the target domain and/or distribution;
• obtaining (120), based at least in part on the target style (2b), validation examples (4) in the target domain and/or distribution, and also corresponding ground truth labels (4*);
• processing (130), by the trained machine learning model (1), the validation examples (4) into outputs (3); and
• determining (140), based on a comparison between the outputs (3) and the respective ground truth labels (4*), the accuracy of the trained machine learning model (1) as the sought ability (1a) of the trained machine learning model (1) to generalize to the target domain.

## Description

The present invention relates to the evaluation of measurement data by means of trained machine learning models.

### Background

In many applications, such as the steering of autonomous vehicles or robots on premises or even in public road traffic, or in quality assurance checking, measurement data are processed using trained machine learning models. In particular, machine learning models are advantageous for the processing of image data from cameras, as well as point cloud data from radar or lidar sensors. Even if two records of such measurement data of any given scene are captured in immediate succession, they will not be identical. This is less of a problem when a trained machine learning model is used for the processing, due to the power of machine learning models to generalize over the training data set on which they were trained.

However, the power to generalize is inherently limited to the domain and/or distribution to which the training data set belongs. If the machine learning model encounters records of measurement data from a too different domain and/or distribution, its output may be less accurate.

### Disclosure of the invention

The invention provides a method for measuring the ability of a trained machine learning model for the processing of measurement data to generalize to a target domain and/or distribution to which one or more input records of measurement data belong. The machine learning model is trained for a particular given task. Therefore, the ability to generalize is measured with respect to this given task. The target domain and/or distribution need not be explicitly known. It suffices that the input records of measurement data are representatives of this domain and/or distribution.

In particular, the term "machine learning model" comprises any function with a high power to generalize that is adaptable by means of parameters which characterize its behavior. For example, the machine learning model may comprise one or more neural networks. The parameters may, for example, comprise weights with which inputs to neurons are summed to an activation of this neuron.

From the input records of measurement data, a target style that characterizes the target domain and/or distribution is determined. Based at least in part on this target style, validation examples in the target domain and/or distribution are determined. Each such validation example is labelled with a corresponding ground truth label. The ground truth label is the output that the trained machine learning model should ideally produce when given the respective validation example. As it will be discussed below, one way to obtain labelled validation examples is to mix content in a source domain for which a ground truth label is already available with the target style to obtain a new validation example, and reuse the ground truth label for this new validation example.

The trained machine learning model processes the validation examples into outputs. Based on a comparison between the outputs and the respective ground truth labels, the accuracy of the trained machine learning model on the set of validation examples is determined as the sought ability of the trained machine learning model to generalize to the target domain.

In this manner, given any arbitrary way to obtain validation examples based on the target style, it can be determined whether the input records of measurement data are still sufficiently covered by the training of the machine learning model, or whether these input records venture out of the coverage of the training. The latter means that it is no longer guaranteed by the training that the outputs produced by the machine learning model will be correct.

In a figurative analogy, the training of human drivers is quite similar to the training of machine learning models: after just a few tens of hours of training and less than 1000 km, the driver is expected to handle not only the situations encountered during the training, but also unseen situations safely. For example, even a driver who has had all driving classes in summertime is expected to be able to drive in wintery conditions as well. The training of the driver generalizes sufficiently well - if this were not the case, then it would be mandated by law that every driver has to take a certain amount of driving classes in winter. But the power to generalize is not limitless. A driver who has only learned to drive passenger cars is not necessarily able to drive trucks, buses and motorcycles that are operated differently and have a very different dynamic behavior. This is why the driver is required to take additional classes and obtain an upgraded license before he is allowed to drive these very different vehicles.

One exemplary way to obtain validation examples is to detect properties in the input records of measurement data, and then modify examples for which ground truth labels are already known in a manner that they get these properties as well. In a very simple example, in response to detecting that a given image as record of measurement data has been taken in wintertime, snow may be overlaid on an image taken in summertime for which a ground truth label is known. The old ground truth label remains valid for the modified image.

In a particularly advantageous embodiment, the determining of the target domain style comprises:
- processing, by a trained feature extractor network, the input records of measurement data into target feature maps; and
- determining, from these target feature maps, features of the measurement data that characterize the target domain.

For example, a convolutional neural network may be used to produce target feature maps. These target feature maps may then be decomposed into a first contribution with features that characterize the target domain and/or distribution as such on the one hand, and a second contribution with features that characterize content in the target domain and/or distribution on the other hand. Here, only the first contribution is needed. For example, an encoder that may be used together with the StyleGAN network proposed by Nvidia comprises the convolutional neural network, as well as "map2style" and "map2content" means for determining said first style contribution and said second content contribution from the feature map. The first style contribution and the second content contribution may be fed into the StyleGAN generator network.

In a further particularly advantageous embodiment, the obtaining of validation examples comprises:
- providing source examples in a source domain and/or distribution and corresponding ground truth labels;
- determining, from these source examples, a source content that characterizes a content of the source examples within the source domain and/or distribution; and
- combining each source content and the target style into a validation example in the target domain and/or distribution, so that the ground truth label of the respective source example remains valid for the validation example.

In particular, training examples with which the machine network was trained in a supervised manner may be used as source examples. For these training examples, ground truth labels are readily available. The label that was originally assigned to the source example remains valid for the newly generated validation example under the prerequisite that this label actually pertains to the content of the source example, which remains unchanged. For example, in an image as the source example, a car will remain a car, and a tree will remain a tree, even if the image is transformed from daytime to nighttime or from summer to winter. Thus, if the labels relate to objects that the source images show, they will remain valid in the validation image. But if the label relates to the time of day or to the season, and this is part of the style that is being changed, there is no guarantee that the old label will be still appropriate for the validation image.

In a further particularly advantageous embodiment, the determining of a source content comprises:
- processing, by a trained feature extractor network, the source examples into source feature maps; and
- determining, from these source feature maps, features of the source examples that characterize content within the source domain and/or distribution.

For example, akin to the determining of the features that characterize the target domain and/or distribution, a trained feature extractor network may process the source examples into source feature maps. These source feature maps may then be decomposed into a first contribution with features that characterize the source domain and/or distribution as such on the one hand, and a second contribution that characterizes content in then source domain and/or distribution on the other hand. Here, only the second contribution is needed. In particular, said encoder provided in the framework of the StyleGAN network may be used. This encoder forms a pair with the StyleGAN generator and may be trained very generically, so that one and the same encoder may be usable both for determining the style of the input records of measurement data and for determining the content of the source records of measurement data. That is, one and the same trained feature extractor network may be used for producing target feature maps and source feature maps, and one and the same means may be used for the decomposing of these feature maps into domain and style contributions.

In a further particularly advantageous embodiment, the combining of the source content and the target style comprises providing the source content and the target style to a trained generative network. For example, said StyleGAN generator accepts a style as a first input and a content as a second input, and creates a new realistic record of measurement data based on these two inputs.

In a further advantageous embodiment, the obtaining of validation examples comprises retrieving, based on the target style, validation examples from a library. That is, validation examples for the requested target style that have already been pre-computed may be re-used. This saves computation time, in particular if the measuring of the ability to generalize is performed on a regular basis for an ongoing monitoring of the ability of the trained machine learning model to generalize.

In particular, the records of measurement data may comprise images and/or point clouds that assign measurement values of at least one measured quantity to locations in a plane and/or in space. For example, still cameras, video cameras and thermal cameras all produce images as records of measurement data. Radar, lidar and ultrasound measurements frequently yield point clouds as measurement data. The main difference between images and point clouds is that, in a point cloud, the locations in space that are annotated with measurement values of at least one measured quantity need not be in a regular grid. In particular, there may be gaps of different sizes between neighboring points in the point cloud.

In particular, a classifier that maps records of measurement data to classification scores with respect to one or more classes of a given classification may be chosen as the trained machine learning model. For example, the classes may correspond to types of objects whose presence the record of measurement data indicates.

In a further particularly advantageous embodiment, input records of measurement data that have been captured by at least one sensor carried on board a vehicle or robot are chosen. Because vehicles and robots move, they are particularly prone to encountering situations that are no longer covered by the original training of the trained machine learning model.

In particular, the validation examples may be obtained from an external server that is outside the vehicle or robot. The processing of the validation examples, and the determining of the sought ability to generalize, may then performed on board the vehicle or robot. In this manner, the external server needs to compute each validation example only once and can then deliver it time and time again to machine learning models on board multiple vehicles or robots. That is, if there if large fleet of vehicles and/or robots, the computational overhead of producing validation samples may be considerably reduced.

At the same time, it is advantageous to keep the actual determining of the ability to generalize on board the vehicle or robot: While vehicles and robots are likely to be mass-produced and fitted with identical machine learning models initially, the training states of the machine learning models on board individual vehicles or robots may later diverge from one another. For example, the one model may already have the latest updates from the manufacturer installed, while the other model may be lacking this update. Also, a model may be configured for undergoing continued learning at least to a limited extent. Passing the validation records to the model on the server would therefore require transferring the complete set of parameters that characterizes the behavior of the trained model to the server. This set of parameters may be several gigabytes, or more, in size.

In a further particularly advantageous embodiment, in response to determining that the determined ability of the trained machine learning model fulfils a predetermined criterion, a downstream technical system that uses outputs of the machine learning model is actuated to move this technical system into an operational state where it can better tolerate noisy or incorrect outputs. In this manner, negative consequences that may arise from the use of noisy or incorrect outputs by the downstream technical system may be reduced. In case this is not possible, e.g., the model is too bad for some corner cases, a human driver or other operator of the downstream technical system may be prompted to intervene.

For example, if the downstream technical system is a vehicle, the running speed of the vehicle may be limited. The higher the speed, the less time is available to react if there is any problem due to an incorrect output from the machine learning model. For similar reasons, passing maneuvers or other maneuvers that carry an elevated risk may be suppressed. At a higher level of escalation, a human driver may be prompted to take control over the vehicle or robot. At the highest level of escalation, the vehicle or robot may be brought to a stop on a predetermined emergency stop trajectory.

In another example of a quality assurance system that classifies images of manufactured products as to whether the products are good, one possible way of reacting to a poor ability to generalize is to change the physical acquisition process of the measurement data with the goal of improving the ability of the machine learning model to generalize to the then-acquired measurement data. For example, snow that has unexpectedly accumulated outside the factory may obstruct the ingress of daylight through windows of the factory building, so that the lighting conditions are different from what they should be at that particular time of day. In this case, switching on an additional artificial light source may already remedy the problem. Also, products to whose images the machine learning model does not generalize well may be flagged for manual labeling.

As discussed before, the validation examples may be generated by a different entity than the entity who uses them for determining the ability of a trained machine learning model to generalize. In particular, the validation examples may be generated without having to consider one particular trained model.

The invention therefore also relates to a method for generating validation examples for use in the method described above from input records of measurement data.

In the course of this method, source examples in a source domain and/or distribution are provided. These source examples are labelled with corresponding ground truth labels.

From these source examples, a source content that characterizes a content of the source examples within the source domain and/or distribution is determined. As discussed before, the source examples may be considered to be the rendering of a content with a concrete style, so the content can be considered to be the source example minus this concrete style. For example, the content may comprise the types of objects whose presence the source example indicates.

From the input records of measurement data, a target style that characterizes the target domain and/or distribution to which the one or more input records of measurement data belong is determined. This style characterizes how given content in the target domain is rendered.

Each source content and the target style are combined into a validation example in the target domain and/or distribution. As discussed before, provided that the ground truth label of the source example relates to its content that remains unchanged, this ground truth label will remain valid for the validation example.

All disclosure presented above in connection with the method for measuring the ability to generalize is also valid for the method for generating validation examples.

The methods may be wholly or partially computer-implemented and embodied in software. The invention therefore also relates to a computer program with machine-readable instructions that, when executed by one or more computers and/or compute instances, cause the one or more computers and/or compute instances to perform a method. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

### Description of the Figures

The Figures show:
Figure 1 Exemplary embodiment of the method 100 for measuring the ability 1a of a machine learning model 1 to generalize to a target domain and/or distribution of measurement data 2;
Figure 2 Illustration of the generation of validation examples 4;
Figure 3 Correlation of the ability 1a measured using the method 100 with an ability 1a(2) measured using real labelled validation examples from the target domain;
Figure 4 Exemplary embodiment of the method 200 for generating validation examples 4.

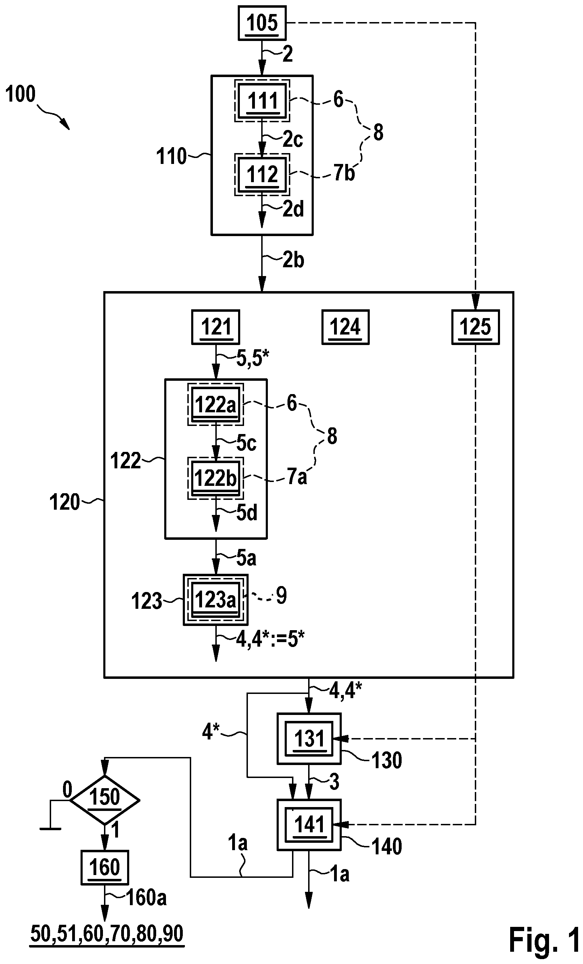

Figure 1 is a schematic flow chart of an embodiment of the method 100 for measuring the ability 1a of a given trained machine learning model 1 to generalize to a target domain and/or distribution of given measurement data 2.

In step 110, from the input records 2 of measurement data, a target style 2b that characterizes the target domain and/or distribution is determined.

To this end, according to block 111, a trained feature extractor network 6 may process the input records 2 of measurement data into target feature maps 2c. According to block 112, features 2d of the measurement data that characterize the target domain may then be determined from these feature maps 2c. To this end, a map-to-style network 7b may be used. The feature extractor network 6 and the map-to-style network 7b may be part of an encoder 8.

In step 120, based at least in part on the target style 2b, validation examples 4 in the target domain and/or distribution, as well as corresponding ground truth labels 4*, are obtained.

According to block 121, source examples 5 in a source domain and/or distribution and corresponding ground truth labels 5* may be provided. According to block 122, from these source examples 5, a source content 5a that characterizes a content of the source examples 5 within the source domain and/or distribution may then be determined. According to block 123, each source content 5a and the target style 2b may then be combined into a validation example 4 in the target domain and/or distribution. Provided that the ground truth label 5* of each source example 5 relates to the source content 5a, which is preserved in the validation example 4, the ground truth label 5* will remain valid as the ground truth label 4* of the generated validation example 4.

According to block 122a, in order to determine the source content 2a, a trained feature extractor network 6 may process the source examples into source feature maps 5c. According to block 122b, features 5d of the source examples 5 that characterize content within the source domain and/or distribution may then be determined from the source feature maps. To this end, for example, a map-to-content network 7a may be used. The feature extractor network 6 and the map-to-content network 7a may be part of an encoder 8. This encoder 8 may comprise the map-to-style network 7b as well.

According to block 123a, the combining of the source content 5a and the target style 2b may comprise providing the source content 5a and the target style 2b to a trained generative network 9.

According to block 124, the obtaining of validation examples 4 may comprise retrieving, based on the target style 2b, validation examples 4 from a library.

In step 130, the trained machine learning model 1 processes the validation examples 4 into outputs 3.

In step 140, based on a comparison between the outputs 3 and the respective ground truth labels 4*, the accuracy of the trained machine learning model 1 is determined as the sought ability 1a of the trained machine learning model 1 to generalize to the target domain.

According to block 105, input records 2 of measurement data that have been captured by at least one sensor carried on board a vehicle 50 or robot 51 may be chosen. In this case, according to block 125, the validation examples 4 may be obtained from an external server that is outside the vehicle 50 or robot 51. The processing of the validation examples 4 may then be performed on board the vehicle 50 or robot 51, according to block 131. The determining of the sought ability 1a to generalize may be performed on board the vehicle 50 or robot 51 as well, according to block 141.

In the example shown in Figure 1a, in step 150, in response to determining that the determined ability 1a of the trained machine learning model fulfils a predetermined criterion 150 (truth value 1), a downstream technical system 50, 51, 60, 70, 80, 90 that uses outputs 3 of the machine learning model 1 may be actuated to move this technical system 50, 51, 60, 70, 80, 90 into an operational state where it can better tolerate noisy or incorrect outputs 3. Examples of such technical systems are a vehicle 50, a robot 51, a driving assistance system 60, a surveillance system 70, a quality inspection system 80, and a medical imaging system 90. In particular, the actuating may be performed using an actuation signal 160a.

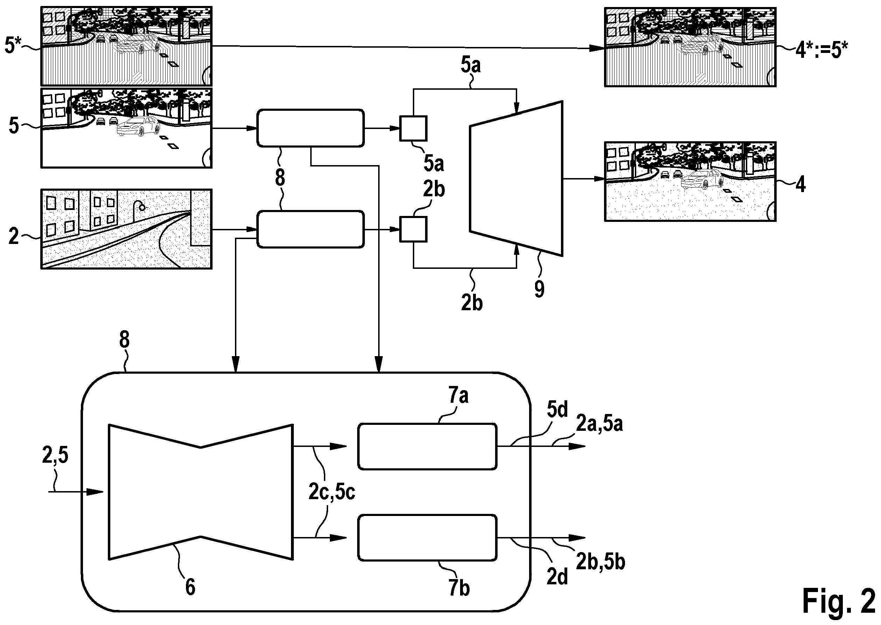

The creation of validation examples 4 is illustrated in Figure 2. In the example shown in Figure 2, the trained machine learning model 1 processes images as records 2 of measurement data and produces semantic segmentations of these images as outputs 3.

In a source domain and/or distribution, source images 5 and corresponding ground truth label maps 5* are available. From these source images 5, the source content 5a is extracted using an encoder 8. Using the same encoder 8, from target images 2 that belong to the target domain and/or distribution, the target style 2b is extracted. A trained generator network 9 takes the source content 5a and the target style 2b as inputs and produces the validation examples 4. Because the content 5a has not changed, the ground truth label maps 5* of the source images 5 remain valid as ground truth label maps 4* of the validation examples 4 in the target domain and/or distribution.

Figure 2 also illustrates the inner structure of the encoder 8. The encoder 8 comprises a feature extractor 6 that processes target images 2 in the target domain, or source images 5 in the source domain, to produce feature maps 2c, 5c. A map-to-content network 7a extracts features 5d that characterize the content of the source image from the feature map 5c of the source image 5, thereby forming the source content 5a. Likewise, target content 2a is formed from the feature map 2c of the target image 2. A map-to-style network 7b extracts features 2d that characterize the style of the target image from the feature map 2c of the target image 2, thereby forming the target style 2b. Likewise, a source style 5b is extracted from the feature map 5c of the source image 5.

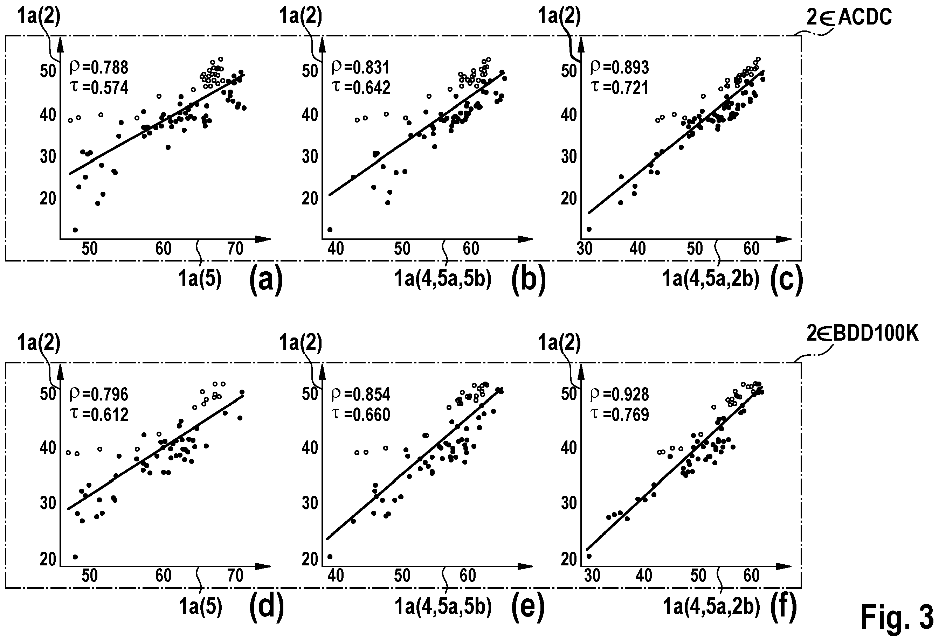

When measuring of the ability 1a of the machine learning model 1 to generalize, the "gold standard" is of course the use of real labelled examples 2 in the target domain. The style-mixed validation examples 4 are a substitute that is easier to get because ground truth labels 5* of source examples 5 can be re-used. Figure 3 illustrates how well the ability 1a measured using style-mixed validation examples 4 is correlated with the ability 1 a(2) measured according to said "gold standard".

In the example shown in Figure 3, the machine learning model 1 produces semantic segmentations from images. It has been trained on the publicly available Cityscapes dataset of road scenes as the source domain. In the top row of Figure 3 (sub-Figures 3a-3c), the target domain is the publicly available ACDC (Adverse Conditions Dataset with Correspondences) dataset of road scenes photographed in adverse visual conditions. In the bottom row of Figure 3 (sub-Figures 3d-3f), the target domain is the publicly available BDD100K diverse driving dataset for heterogeneous multitask learning.

In all sub-Figures 3a-3f, the ability 1 a(2) as measured according to said "gold standard" is compared to another metric. In the left column (sub-Figures 3a and 3d), the other metric 1 a(5) is the accuracy measured on the original Cityscapes validation dataset in the source domain. In the middle column (sub-Figures 3b and 3e), the other metric 1 a(4, 5a, 5b) is the accuracy measured on newly generated validation images 4 in the source domain based on the source content 5a and the source style 5b. In the right column (sub-Figures 3c and 3f), the other metric 1 a(4, 5a, 5b) is the accuracy measured on newly generated mixed-style validation images 4 based on the source content 5a and the target style 2b. In each of the sub-Figures 3a-4f, each data point corresponds to one machine learning model. A total of 95 models are investigated. Filled circles as symbols represent machine learning models with convolutional neural networks as backbones. Hollow circles as symbols represent machine learning models with transformer networks as backbones.

Over all datapoints in each plot, two different correlation metrics were computed, namely Spearman's Rank Correlation coefficient ρ and Kendall Rank Correlation Coefficient τ that quantitatively measure the correlation strength. Both metrics can vary in an interval between -1 and 1. A value close to -1 indicates a strong negative correlation, and a value close to 1 indicates a strong positive correlation. A value of 0 indicates perfect decorrelation. Both metrics are non-parametric, i.e., do not require any assumptions about the data distribution. Also, the assessment is based on the ranking of the data.

For both ACDC and BDD100K as target domains, a good correlation (ρ=0.893 a and ρ=0.928 respectively) is observed, indicating that the style-mixed validation examples 4 can serve as a good replacement for actual validation images 4 in the target domain to test the generalization to the respective target domain.

It is also observed that even using generated validation images 4 produced from the source content 5a and source style 5b provides a significant improvement over just using the source images as they are. A possible explanation is that by applying this "intra-source style augmentation", the data coverage is improved, and the metric can therefore better measure the generalization ability under style shifts. After all, with respect to the original Cityscapes training dataset, most of the ACDC dataset and the BDD100K dataset is out-of-distribution data.

It is further observed that in all sub-Figures 3a-3f, almost all transformer-based models (data points marked with hollow circles as symbols) are above the diagonal line that represents the linear fit. This suggests that transformer-based models present better generalization ability under natural shifts compared with models based on convolutional neural networks.

It is also observed that the values of the metrics obtained for the 95 models span a quite large range. This means that there are large differences between the performances of the models, and the metrics are a well-suited tool to decide which model is best in a given use case.

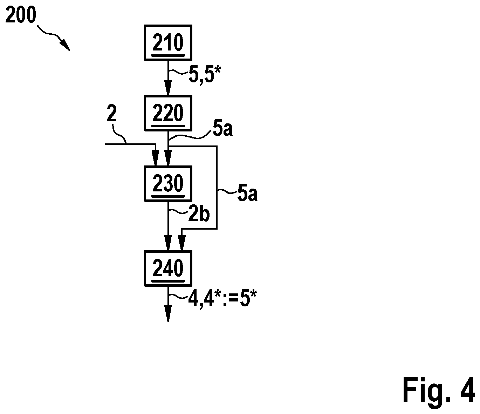

Figure 4 is a schematic flow chart of an embodiment of the method 200 for generating validation examples for use in the method 100 described above. The method 200 starts from given input records 2 of measurement data.

In step 210, source examples 5 in a source domain and/or distribution are provided, together with corresponding ground truth labels 5*.

In step 220, from each source example 5, a source content 5a that characterizes a content of the source examples 5 within the source domain and/or distribution is determined.

In step 230, a target style 2b that characterizes the target domain and/or distribution to which the one or more input records 2 of measurement data belong is determined from the input records 2 of measurement data.

In step 240, each source content 5a and the target style 2b are combined into a validation example 4 in the target domain and/or distribution. In this manner, the ground truth label 5*=:4* of the respective source example 5 remains valid for the validation example 4.

## Claims

1. A method (100) for measuring the ability (1a) of a trained machine learning model (1) for the processing of measurement data to generalize, with respect to a given task, to a target domain and/or distribution to which one or more input records (2) of measurement data belong, comprising the steps of:
• determining (110), from the input records (2) of measurement data, a target style (2b) that characterizes the target domain and/or distribution;
• obtaining (120), based at least in part on the target style (2b), validation examples (4) in the target domain and/or distribution, and also corresponding ground truth labels (4*);
• processing (130), by the trained machine learning model (1), the validation examples (4) into outputs (3); and
• determining (140), based on a comparison between the outputs (3) and the respective ground truth labels (4*), the accuracy of the trained machine learning model (1) as the sought ability (1a) of the trained machine learning model (1) to generalize to the target domain.

2. The method (100) of claim 1, wherein the determining (110) of the target style (2b) comprises:
• processing (111), by a trained feature extractor network (6), the input records (2) of measurement data into target feature maps (2c); and
• determining (112), from these target feature maps (2c), features (2d) of the measurement data that characterize the target domain.

3. The method (100) of any one of claims 1 to 2, wherein the obtaining (120) of validation examples (4) comprises:
• providing (121) source examples (5) in a source domain and/or distribution and corresponding ground truth labels (5*);
• determining (122), from these source examples (5), a source content (5a) that characterizes a content of the source examples (5) within the source domain and/or distribution; and
• combining (123) each source content (5a) and the target style (2b) into a validation example (4) in the target domain and/or distribution, so that the ground truth label (5*=:4*) of the respective source example (5) remains valid for the validation example (4).

4. The method (100) of claim 3, wherein the determining (122) of a source content (5a) comprises:
• processing (122a), by a trained feature extractor network (6), the source examples (5) into source feature maps (5c); and
• determining (122b), from these source feature maps (5c), features (5d) of the source examples (5) that characterize content within the source domain and/or distribution.

5. The method (100) of any one of claims 3 to 4, wherein the combining (123) of the source content (5a) and the target style (2b) comprises providing (123a) the source content (5a) and the target style (2b) to a trained generative network (9).

6. The method (100) of any one of claims 1 to 5, wherein the obtaining (120) of validation examples (4) comprises (124) retrieving, based on the target style (2b), validation examples (4) from a library.

7. The method (100) of any one of claims 1 to 6, wherein the records of measurement data comprise images and/or point clouds that assign measurement values of at least one measured quantity to locations in a plane and/or in space.

8. The method (100) of any one of claims 1 to 7, wherein a classifier that maps records of measurement data to classification scores with respect to one or more classes of a given classification is chosen as the trained machine learning model (1).

9. The method (100) of any one of claims 1 to 8, wherein input records (2) of measurement data that have been captured by at least one sensor carried on board a vehicle (50) or robot (51) are chosen (105).

10. The method (100) of claim 9, wherein
• the validation examples (4) are obtained (125) from an external server that is outside the vehicle (50) or robot (51); and
• the processing of the validation examples (4), and the determining of the sought ability (1a) to generalize, are performed (131, 141) on board the vehicle (50) or robot (51).

11. The method (100) of any one of claims 1 to 10, further comprising, in response to determining that the determined ability (1a) of the trained machine learning model fulfils a predetermined criterion (150), actuating (160) a downstream technical system (50, 51, 60, 70, 80, 90) that uses outputs (3) of the machine learning model (1) to move this technical system (50, 51, 60, 70, 80, 90) into an operational state where it can better tolerate noisy or incorrect outputs (3).

12. A method (200) for generating validation examples (4) for use in the method (100) of claim 1 from input records (2) of measurement data, comprising the steps of:
• providing (210) source examples (5) in a source domain and/or distribution and corresponding ground truth labels (5*);
• determining (220), from these source examples (5), a source content (5a) that characterizes a content of the source examples (5) within the source domain and/or distribution;
• determining (230), from the input records (2) of measurement data, a target style (2b) that characterizes the target domain and/or distribution to which the one or more input records (2) of measurement data belong; and
• combining (240) each source content (5a) and the target style (2b) into a validation example (4) in the target domain and/or distribution, so that the ground truth label (5*=:4*) of the respective source example (5) remains valid for the validation example (4).

13. A computer program, comprising machine-readable instructions that, when executed on one or more computers and/or compute instances, cause the one or more computers and/or compute instances to perform a method (100, 200) of any one of claims 1 to 12.

14. A non-transitory machine-readable data carrier and/or a download product with the computer program of claim 13.

15. One or more computers with the computer program of claim 13, and/or with the non-transitory machine-readable data carrier and/or download product of claim 14.

## Amended claims

### Amended claims in accordance with Rule 137(2) EPC.

1. A computer-implemented method (100) for measuring the ability (1a) of a trained machine learning model (1) for the processing of measurement data to generalize, with respect to a given task, to a target domain and/or distribution to which one or more input records (2) of measurement data belong, comprising the steps of:
• determining (110), from the input records (2) of measurement data, a target style (2b) that characterizes the target domain and/or distribution;
• obtaining (120), based at least in part on the target style (2b), validation examples (4) in the target domain and/or distribution, and also corresponding ground truth labels (4*);
• processing (130), by the trained machine learning model (1), the validation examples (4) into outputs (3); and
• determining (140), based on a comparison between the outputs (3) and the respective ground truth labels (4*), the accuracy of the trained machine learning model (1) as the sought ability (1a) of the trained machine learning model (1) to generalize to the target domain,
wherein the obtaining (120) of validation examples (4) comprises:
• providing (121) source examples (5) in a source domain and/or distribution and corresponding ground truth labels (5*);
• determining (122), from these source examples (5), a source content (5a) that characterizes a content of the source examples (5) within the source domain and/or distribution; and
• combining (123) each source content (5a) and the target style (2b) into a validation example (4) in the target domain and/or distribution, so that the ground truth label (5*=:4*) of the respective source example (5) remains valid for the validation example (4),
and wherein the method further comprises, in response to determining that the determined ability (1a) of the trained machine learning model fulfils a predetermined criterion (150), actuating (160) a downstream technical system (50, 51, 60, 70, 80, 90) that uses outputs (3) of the machine learning model (1) to move this technical system (50, 51, 60, 70, 80, 90) into an operational state where it can better tolerate noisy or incorrect outputs (3).

2. The method (100) of claim 1, wherein the determining (110) of the target style (2b) comprises:
• processing (111), by a trained feature extractor network (6), the input records (2) of measurement data into target feature maps (2c); and
• determining (112), from these target feature maps (2c), features (2d) of the measurement data that characterize the target domain.

3. The method (100) of any one of claims 1 to 2, wherein the determining (122) of a source content (5a) comprises:
• processing (122a), by a trained feature extractor network (6), the source examples (5) into source feature maps (5c); and
• determining (122b), from these source feature maps (5c), features (5d) of the source examples (5) that characterize content within the source domain and/or distribution.

4. The method (100) of any one of claims 1 to 3, wherein the combining (123) of the source content (5a) and the target style (2b) comprises providing (123a) the source content (5a) and the target style (2b) to a trained generative network (9).

5. The method (100) of any one of claims 1 to 4, wherein the obtaining (120) of validation examples (4) comprises (124) retrieving, based on the target style (2b), validation examples (4) from a library.

6. The method (100) of any one of claims 1 to 5, wherein the records of measurement data comprise images and/or point clouds that assign measurement values of at least one measured quantity to locations in a plane and/or in space.

7. The method (100) of any one of claims 1 to 6, wherein a classifier that maps records of measurement data to classification scores with respect to one or more classes of a given classification is chosen as the trained machine learning model (1).

8. The method (100) of any one of claims 1 to 7, wherein input records (2) of measurement data that have been captured by at least one sensor carried on board a vehicle (50) or robot (51) are chosen (105).

9. The method (100) of claim 8, wherein
• the validation examples (4) are obtained (125) from an external server that is outside the vehicle (50) or robot (51); and
• the processing of the validation examples (4), and the determining of the sought ability (1a) to generalize, are performed (131, 141) on board the vehicle (50) or robot (51).

10. A computer-implemented method (200) for generating validation examples (4) for use in the method (100) of claim 1 from input records (2) of measurement data, comprising the steps of:
• providing (210) source examples (5) in a source domain and/or distribution and corresponding ground truth labels (5*);
• determining (220), from these source examples (5), a source content (5a) that characterizes a content of the source examples (5) within the source domain and/or distribution;
• determining (230), from the input records (2) of measurement data, a target style (2b) that characterizes the target domain and/or distribution to which the one or more input records (2) of measurement data belong; and
• combining (240) each source content (5a) and the target style (2b) into a validation example (4) in the target domain and/or distribution, so that the ground truth label (5*=:4*) of the respective source example (5) remains valid for the validation example (4).

11. A computer program, comprising machine-readable instructions that, when executed on one or more computers and/or compute instances, cause the one or more computers and/or compute instances to perform a method (100, 200) of any one of claims 1 to 10.

12. A non-transitory machine-readable data carrier and/or a download product with the computer program of claim 11.

13. One or more computers with the computer program of claim 11, and/or with the non-transitory machine-readable data carrier and/or download product of claim 12.
